# EUROPÄISCHE PATENTSCHRIFT

(11) **EP 0 732 823 B1**
(45) Veröffentlichungstag und Bekanntmachung des Hinweises auf die Patenterteilung: **02.07.2003**
(21) Anmeldenummer: 95117909.2
(22) Anmeldetag: 14.11.1995
(51) Int. Cl.: H04J 3/06, H04L 7/00

(54) **Verfahren zur empfangsseitigen Taktrückgewinnung für Digitalsignale**
Method for clock recovery of a digital signal on the reception side
Méthode de récupération d'horloge d'un signal numérique à la réception

(30) Priorität: 16.03.1995 DE 19509484
(43) Veröffentlichungstag der Anmeldung: 18.09.1996
(73) Patentinhaber: Deutsche Telekom AG, 53113 Bonn (DE)
(72) Erfinder: Assmus, Ulf, D-64289 Darmstadt (DE); Detlev, Martin, D-64380 Rossdorf (DE); Heckwolf, Willy, D-64839 Münster (DE); Becker, Dieter, D-64289 Darmstadt (DE)
(74) Vertreter: Gornott, Dietmar, Dipl.-Ing.

(56) Entgegenhaltungen:
- EP-A- 0 487 428
- US-A- 4 759 041
- US-A- 5 274 681
- HESSENMUELLER H ET AL: "HIGH-QUALITY VIDEO AND AUDIO SIGNAL TRANSMISSION IN A BROADBAND ISDN BASED ON ATD" EBU REVIEW- TECHNICAL, Nr. 247, 1.Juni 1991, Seiten 124-131, XP000228454
- MONTGOMERY W A: "TECHNIQUES FOR PACKET VOICE SYNCHRONIZATION" IEEE JOURNAL ON SELECTED AREAS IN COMMUNICATIONS, Bd. SAC-01, Nr. 6, 1.Dezember 1983, Seiten 1022-1028, XP000563228

## Beschreibung

Die Erfindung betrifft ein Verfahren und Anordnungen zur empfangsseitigen Taktrückgewinnung für Digitalsignale mit konstanter Bitrate nach zellstrukturierter, asynchroner Übertragung mit unterschiedlich langen Pausen zwischen einzelnen Zellen unter Benutzung des Füllstandes eines FIFO-Speichers, in welchen die empfangenen Digitalsignale eingeschrieben werden.

Die Übertragung von Digitalsignalen erfolgt häufig asynchron und zellstrukturiert, worauf empfangsseitig die Digitalsignale zu einem kontinuierlichen Digitalsignal mit konstanter Bitrate geformt werden müssen. Dazu ist die Rückgewinnung des den Digitalsignalen zugrundeliegenden Taktes - im folgenden auch Datentakt genannt - erforderlich.

Ein Verfahren zur zellstrukturierten asynchronen Übertragung von Digitalsignalen ist beispielsweise beschrieben in Martin Prycker et al.: "ASYNCHRONOUS TRANSFER MODE, Solution for Broadband ISDN", Verlag Ellis Horwood, Seiten 97 bis 116, wobei die Kurzbezeichnung ATM für dieses Verfahren eingeführt wurde. Die bevorzugte Anwendung des Verfahrens ist die Übertragung von Breitbandsignalen.

Bei diesem bekannten Verfahren ist die Rückgewinnung eines kontinuierlichen Datenstroms durch eine Zwischenspeicherung der Daten in einem FIFO-Speicher und anschließender Taktableitung aus dem Füllstand dieses FIFO-Speichers möglich. Ein bisher noch nicht befriedigend gelöstes Problem ist eine jitterfreie Taktrückgewinnung, die wegen der Zellstruktur des Signals mit unterschiedlich langen Pausen zwischen den einzelnen Zellen Schwierigkeiten bereitet.

Durch US 4,759,041 sind Schaltungen zur Gewinnung eines Taktsignals beim Empfang von Datenpaketen aus einem lokalen Netzwerk bekanntgeworden. Dabei wird als Funktion des Füllstandes eines Empfangs-Pufferspeichers die Frequenz eines Auslesetaktes digital gesteuert. Zum einen wird ein spannungsgesteuerter Oszillator zwischen zwei vorgegebenen Frequenzen umgeschaltet, zum anderen wird der Füllstand digital verarbeitet und zur Steuerung eines numerisch gesteuerten Oszillators herangezogen. Beide Vorschläge führen jedoch nicht zu einer sich kontinuierlich an die eingehende Datenrate genauestens anpassenden Taktfrequenz.

EP 0 487 428 A1 betrifft eine Anordnung zur Übertragung von synchronen Informationen mit Hilfe eines asynchronen Netzwerkes, insbesondere eines ATM-Netzes. Dabei wird aus dem Füllstand eines FIFO-Speichers ein Takt wiedergewonnen, der zwei Frequenzen einnehmen kann.

Ferner ist aus US 5,274,681 beim Empfang von Videosignalen, die zusätzlich differentielle Abtastdaten enthalten, die Gewinnung eines Auslesetaktes für einen FIFO-Speicher bekannt. Hierbei wird jedoch der Füllstand in groben Stufen ausgewertet, worauf zur Erlangung eines sich kontinuierlich ändernden Taktsignals ein erheblicher Schaltungsaufwand erforderlich ist.

Aufgabe der Erfindung ist es, ein Verfahren und Anordnungen zur Rückgewinnung eines kontinuierlichen, jitterfreien Taktes anzugeben, der strengen Anforderungen durch eine folgende digitale Verarbeitung genügt.

Diese Aufgabe wird erfindungsgemäß dadurch gelöst, daß zu Beginn einer Übertragung in den mehrere Zellen der empfangenen Signale fassenden FIFO-Speicher zunächst die Digitalsignale mit einem empfangenen Takt eingelesen werden, bis der FIFO-Speicher halb gefüllt ist, daß die in den FIFO-Speicher eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers in ein Analogsignal umgewandelt wird, das als Stellgröße einem spannungsgesteuerten Oszillator zugeführt wird, aus dessem Ausgangssignal der Auslesetakt abgeleitet wird, und daß ein aus den empfangenen Digitalsignalen gewonnener Zelltakt zur zeitlichen Festlegung von Abfragen des Füllstandes des FIFO-Speichers benutzt wird.

Dabei kann vorgesehen sein, daß die Stellgröße mehreren spannungsgesteuerten Oszillatoren zugeführt wird. Dadurch ist die Abdeckung eines großen Frequenzbereichs möglich.

Das erfindungsgemäße Verfahren weist den Vorteil auf, daß empfangsseitig in dem Endgeräte-Adapter lediglich ein größerer FIFO-Speicher notwendig ist, um die Daten zwischenzuspeichern. Ferner besteht die Möglichkeit, diesen FIFO-Speicher vor einem Zellauflöser anzuordnen, so daß der Zellauflöser mit der geringeren Datentaktfrequenz und nicht mit der wesentlich höheren Netztaktfrequenz betrieben werden muß.

Das erfindungsgemäße Verfahren kann in vorteilhafter Weise bei der Übertragung von Digitalsignalen angewendet werden, beispielsweise bei der Übertragung von codierten Audio- und Videosignalen, auch von MPEG-codierten Signalen. Die bekannten MPEG-Verfahren gestatten die Wahl unterschiedlicher Übertragungsbitraten je nach erwünschter Qualität des decodierten Analogsignals. Die Ausnutzung dieser Eigenschaften der Coder und Decoder machen eine Taktrückgewinnung notwendig, die die Wiedergewinnung des an sich konstanten Taktes des MPEG-Signals empfangsseitig gestattet. Die Coder und Decoder sind zwar auf unterschiedliche Bitraten einstellbar, während des Betriebes bleibt die Bitrate jedoch konstant.

Eine vorteilhafte Ausführungsform des erfindungsgemäßen Verfahrens besteht darin, daß der Füllstand des FIFO-Speichers in Zeitabständen von mehreren Zelltaktperioden abgefragt wird. Hierdurch ist bereits eine grobe Glättung des Datentaktes möglich. Eine weitere Glättung des Datentaktes ist dadurch möglich, daß über mehrere Abfragen des Füllstandes des FIFO-Speichers ein Mittelwert gebildet wird.

Eine einfache Möglichkeit zur Wahl des Datentaktes besteht bei einer vorteilhaften Anordnung zur Durchführung des erfindungsgemäßen Verfahrens darin, daß zu Beginn einer Übertragung in den mehrere Zellen der empfangenen Signale fassenden FIFO-Speicher zunächst die Digitalsignale mit einem empfangenen Takt eingelesen werden, bis der FIFO-Speicher halb gefüllt ist, daß die in den FIFO-Speicher eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers in ein Analogsignal umgewandelt wird, das als Stellgröße einem spannungsgesteuerten Oszillator zugeführt wird, aus dessem Ausgangssignal der Auslesetakt abgeleitet wird, und daß zur Gewinnung eines Datentaktes mit wählbarer Frequenz dem spannungsgesteuerten Oszillator ein steuerbarer Frequenzteiler nachgeschaltet ist.

Dabei kann der Frequenzteiler durch manuelle Eingaben gesteuert werden und/oder ein interner Takt aus dem Signal des spannungsgesteuerten Oszillators abgeleitet werden. Eine automatische Einstellung ist beispielsweise dadurch möglich, daß der Frequenzteiler in Abhängigkeit von mit den Digitalsignalen empfangenen Steuerdaten oder in Abhängigkeit vom Füllstand steuerbar ist.

Eine andere Anordnung zur Durchführung des erfindungsgemäßen Verfahrens besteht darin, daß zu Beginn einer Übertragung in den mehrere Zellen der empfangenen Signale fassenden FIFO-Speicher zunächst die Digitalsignale mit einem empfangenen Takt eingelesen werden, bis der FIFO-Speicher halb gefüllt ist, daß die in den FIFO-Speicher eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers in ein Analogsignal zur Steuerung der Frequenz des Auslesetaktes umgewandelt wird, das als Stellgröße einem spannungsgesteuerten Oszillator zugeführt wird, aus dessem Ausgangssignal der Auslesetakt abgeleitet wird, und daß der FIFO-Speicher vor einem Zellauflöser angeordnet ist.

Dies hat den Vorteil, daß auf den FIFO-Speicher folgende Schaltungen, insbesondere der Zellauflöser, eine Bit-Entschachtelung und ein Paritätsdecoder, mit einer niedrigeren Frequenz betrieben werden können. Ein Terminal Adapter mit derartigen Schaltungen, der für die Anwendung des erfindungsgemäßen Verfahrens und der erfindungsgemäßen Anordnung geeignet ist, ist beschrieben von Ulf Aßmus und Serafin Nunes in "Übermittlung von codierten Audiosignalen niedriger Bitrate in einem zukünftigen ATM-Netz", RTM Heft 3, 1994, S. 85 bis 91.

Ausführungsbeispiele der Erfindung sind in der Zeichnung anhand mehrerer Figuren dargestellt und in der nachfolgenden Beschreibung näher erläutert. Es zeigt:
- Fig. 1: eine Anordnung zur Durchführung des erfindungsgemäßen Verfahrens,
- Fig. 2: eine Anordnung zur Bestimmung des Füllstandes des FIFO-Speichers,
- Fig. 3: eine Anordnung zur Mittelwertbildung und
- Fig. 4: eine Anordnung zur Erzeugung des Datentaktes.

Gleiche Teile sind in den Figuren mit gleichen Bezugszeichen versehen. Das Ausführungsbeispiel sowie Teile davon sind zwar als Blockschaltbilder dargestellt. Dieses bedeutet jedoch nicht, daß das erfindungsgemäße Verfahren auf eine Realisierung mit Hilfe von einzelnen den Blöcken entsprechenden Schaltungen beschränkt ist. Die erfindungsgemäße Schaltungsanordnung ist vielmehr in besonders vorteilhafter Weise mit Hilfe von hochintegrierten Schaltungen realisierbar. Dabei können digitale Signalprozessoren eingesetzt werden, welche bei geeigneter Programmierung die in den Blockschaltbildern dargestellten Verarbeitungsschritte durchführen.

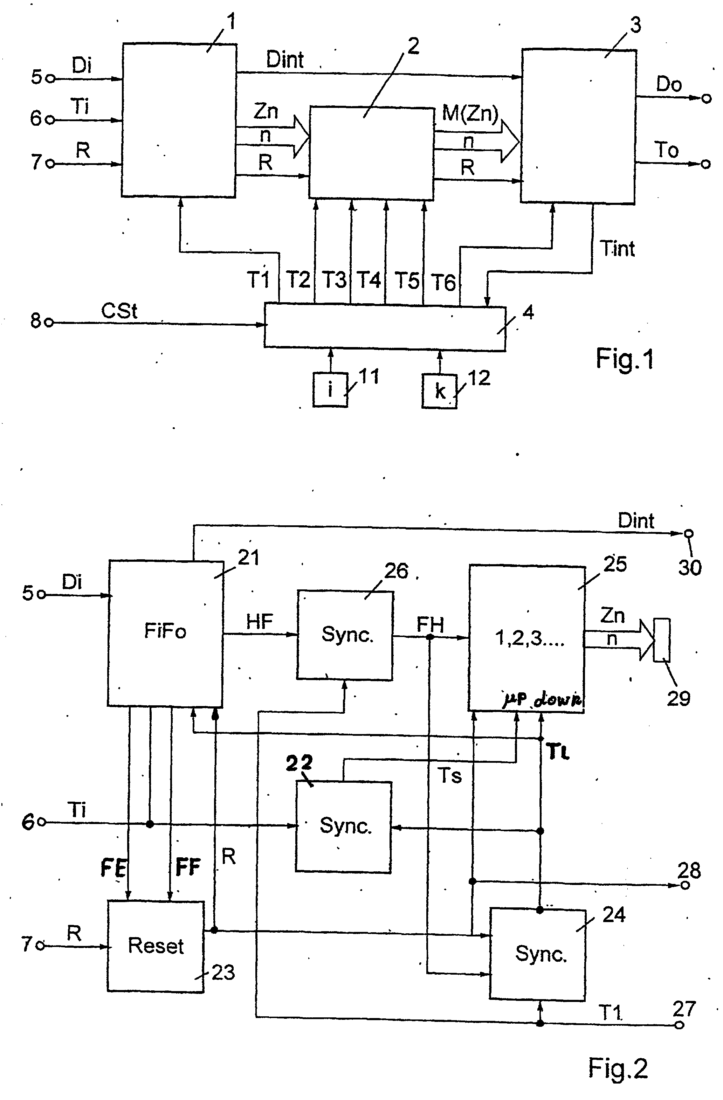

Die Anordnung nach Fig. 1 besteht aus einem Speicher 1, einem Mittelwertbildner 2, einem Taktgenerator 3 und einer Taktzentrale 4. Den Eingängen 5, 6, 7, 8 werden zusammen mit den empfangenen Daten Di ein Taktsignal Ti, das maximal die Frequenz des Netztaktes haben kann, ein Rücksetzsignal R und ein Signal CSt zugeführt, welches den Beginn einer Zelle der zugeführten Digitalsignale kennzeichnet und daher im folgenden Zellstartsignal genannt wird.

Dem Speicher 1 sind die zugeführten Digitalsignale als interner Datenstrom Dint, der jeweilige Füllstand des im Speicher 1 enthaltenen FIFO-Speichers als n Bit breites Signal Zn und ein Rücksetzsignal R entnehmbar. Der Speicher 1 wird später im Zusammenhang mit Fig. 2 genauer beschrieben.

Aus mehreren Werten des Füllstandes Zn wird im Mittelwertbildner 2 der Mittelwert M(Zn) gebildet und zusammen mit einem Rücksetzsignal R dem Taktgenerator 3 zugeleitet, an dessen Ausgang die Daten Do im konstanten und kontinuierlichen Datentakt To anstehen.

Vom Taktgenerator 3 wird ein interner Takt Tint der Taktzentrale 4 zugeführt, welche daraus und aus dem Zellstartsignal CSt Taktsignale T1 bis T6 ableitet, die zur Steuerung der einzelnen Baugruppen innerhalb der Anordnung nach Fig. 1 benötigt und im Zusammenhang mit den Figuren 2 bis 4 genauer erläutert werden. Die Taktzentrale 4 weist zwei Eingabeeinrichtungen 11, 12 auf, mit welchen manuell Größen i und k eingegeben werden können. i bedeutet den Abstand zwischen zwei zur Mittelwertbildung übernommenen Werten des Füllstandes Zn, abgeleitet aus dem Zelltakt. Dazu wird'in der Taktzentrale 4 das Zellstartsignal CSt bis zum Erreichen des eingestellten Wertes von i gezählt, worauf ein Taktsignal T5 erzeugt wird. Zur Mittelwertbildung werden k Werte benutzt, wozu k mit Hilfe der Eingabeeinrichtung 12 einstellbar ist.

Fig. 2 zeigt den Speicher 1 (Fig. 1) in detaillierterer Darstellung. Die empfangenen Digitalsignale werden vom Eingang 5 dem Dateneingang eines FIFO-Speichers 21' zugeleitet, in den die Digitalsignale Di mit dem bei 6 zugeführten Takt Ti eingeschrieben werden. Der Takt Ti wird ferner einer Synchronisierschaltung 22 zugeleitet, die im einzelnen später beschrieben wird. Das Rücksetzsignal R gelangt vom Eingang 7 zu einer Rücksetzschaltung 23, die vom FIFO-Speicher 21 ebenfalls die Signale FE und FF erhält wenn der FIFO-Speicher leer bzw. voll ist. Ferner leitet die Rücksetzschaltung 23 das Signal R an den FIFO-Speicher 21 und an eine weitere Synchronisierschaltung 24 weiter.

Ein Zähler 25 ist über eine dritte Synchronisierschaltung 26 mit einem Ausgang des FIFO-Speichers 21 verbunden, der ein Signal HF (halbvoll) abgibt. Der Inhalt des Zählers, der als Aufwärts/Abwärts-Zähler ausgebildet ist, gibt den Füllstand des FIFO-Speichers 21 wieder und stellt somit einen Zeiger auf den Füllstand dar. Zur Steuerung des Zählers entsprechend den durch Schreib- und Lesevorgänge verursachten Änderungen des Füllstandes des FIFO-Speichers 21 erhält der Zähler 25 außer einem Rücksetzimpuls R die Taktsignale T_{L} und Ts, welche bei einem Lesevorgang den Füllstand dekrementieren und bei einem Schreibvorgang den Füllstand inkrementieren.

Der in Fig. 2 dargestellten Schaltung wird von der Taktzentrale 4 das Taktsignal T1 über einen Eingang 27 zugeleitet. Das Rücksetzsignal R kann für weitere Schaltungen über einen Ausgang 28 entnommen werden. Ein dritter Ausgang 29 führt den Füllstand Zn, während von einem Ausgang 30 die Daten Dint zum Taktgenerator 3 weitergeleitet werden.

Da die Takte T1 und Ti nicht synchron zueinander sind, werden Signale, die sich zunächst im Zeitraster des Taktes Ti befinden, durch die Synchronisierschaltungen 22, 24, 26 in das Zeitraster des Taktes T1 gebracht. So befindet sich beispielsweise das Signal HF, das den halben Füllstand kennzeichnet, im Raster des Taktes Ti. Der Zähler 25 wird jedoch im Raster des Taktes T1 betrieben. Deshalb wird in der Synchronisierschaltung 26 ein Impuls FH* abgeleitet, der zeitlich mit dem ersten Impuls des Taktsignals T1, der nach einem Impuls HF auftritt, übereinstimmt. Dazu kann in einfacher Weise ein D-Flip-Flop mit dem Takt T1 getriggert werden, dessen Dateneingang mit dem Impuls HF beaufschlagt ist.

Die Synchronisierschaltung 24 gibt das Taktsignal TL nach dem Einschalten oder einem Reset erst frei, wenn durch den Impuls FH* das Erreichen des halben Füllstandes angezeigt ist. Dann beginnt mit Hilfe des Taktes TL das Auslesen der Daten aus dem FIFO-Speicher 21 und ein entsprechendes Dekrementieren des Zählerstandes. Das Inkrementieren erfolgt durch jeweils einen Impuls des Taktes Ts, der mit Hilfe der Synchronisierschaltung 22 aus dem Takt Ti abgeleitet und in das Raster des Taktes T1 über den Takt T1 überführt wird. Dieses erfolgt derart, daß sichergestellt ist, daß der Zähler nicht gleichzeitig Impulse zum Inkrementieren und Dekrementieren erhält.

Um ein Auseinanderdriften des tatsächlichen Füllstandes im FIFO-Speicher 21 und des vom Zähler 25 angezeigten zu verhindern, wird der Zähler 25 jedes Mal auf den halben Zählerstand gesetzt, wenn der FIFO-Speicher 21 einen Impuls HF abgibt. Für den Fall, daß - durch eine Fehlfunktion bedingt - der FIFO-Speicher entweder voll oder leer wird, wird über die Impulse FF bzw. FE ein Rücksetzen veranlaßt, wodurch der Ursprungszustand beim Einschalten wieder hergestellt wird. Die Anzahl der Bits, die vom Ausgang 29 abnehmbar sind, hängt von der Größe des FIFO-Speichers ab, welche mit 2ⁿ Bit gegeben ist.

Bei einer Integration dieses Blockes kann der Zeiger aus den Zählerständen der für den FIFO-Speicher notwendigen Zählern für das Ein- bzw. Auslesen gewonnen werden.

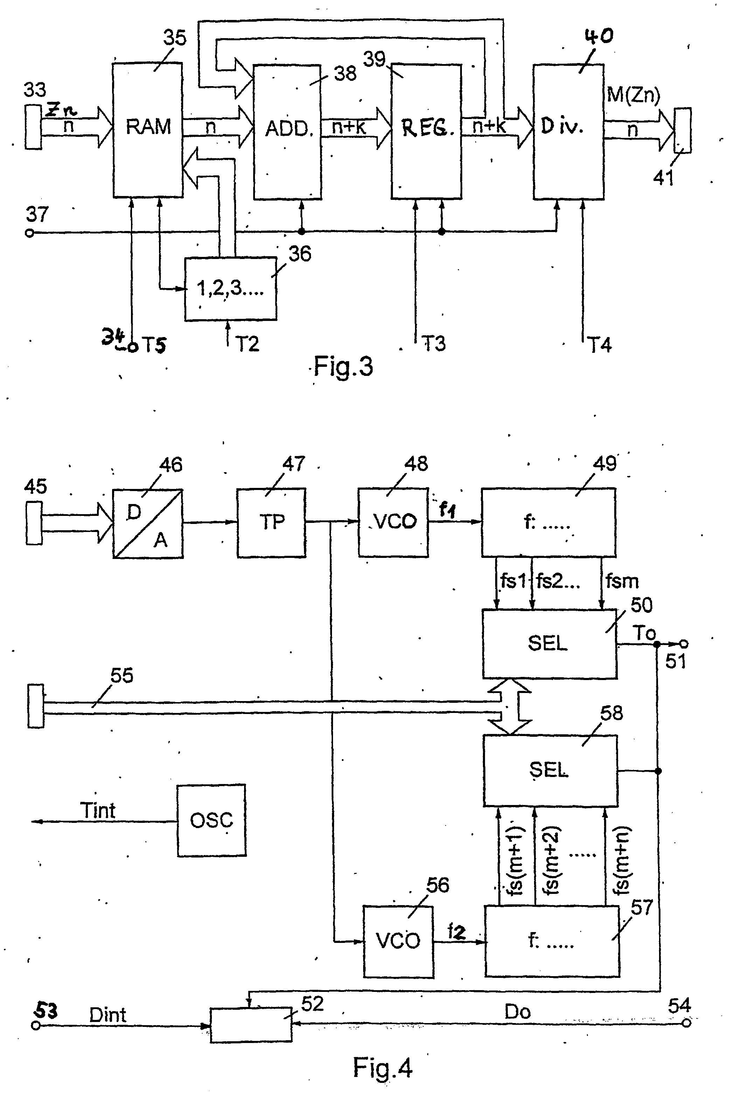

Der Mittelwertbildner 2 (Fig. 1) ist in Fig. 3 detaillierter dargestellt. Einem Eingang 33 wird der Füllstand Zn von dem Speicher 1 (Fig. 1) zugeführt. Bei jeweils einem Impuls des bei 34 zugeführten Taktsignals T5 wird ein Wert von Zn als n Bit breites Wort in einen Schreib-Lese-Speicher 35 übernommen. In dem Schreib-Lese-Speicher 35 können so viele Werte von Zn gespeichert werden, wie es im Einzelfall für die anschließende Mittelwertbildung erforderlich ist. Die jeweils zu wählende und bei 12 (Fig. 1) eingestellte Zahl k wird dem Schreib-Lese-Speicher 35 von einem Zähler 36 zugeleitet, der beginnend mit einem bei 37 zugeführten Rücksetzimpuls R bis zum Eintreffen des Taktsignals T2 aufwärts zählt und dabei die Zahl k erreicht.

Die eigentliche Mittelwertbildung erfolgt mit Hilfe eines Addierers 38, eines Registers 39 und eines Dividierers 40. Zu Beginn der Bildung der Mittelwerte von jeweils k Werten von Zn werden außer dem Schreib-Lese-Speicher 35 der Addierer 38, das Register 39 und der Dividierer 40 zurückgesetzt. Jedes der darauf eintreffenden Datenworte wird im Addierer 38 der Summe über (k-1) Werte der vorausgegangenen Datenworte hinzuaddiert, wobei von k Werten immer der älteste Wert durch den aktuellen neuesten Wert ersetzt wird. Die Summe 1 bis k wird dann in das Register 39 eingeschrieben und steht zur Addition mit dem folgenden Datenwort zur Verfügung. Die für k Datenworte aufaddierte Summe wird dann im Dividierer durch k geteilt, an dessen Ausgang 41 der Mittelwert M(Zn) aus k Wörtern ansteht.

Das Register 39 wird von einem Takt T3 und der Dividierer von einem Takt T4 angesteuert. Die Taktsignale T2 bis T4 werden von der Taktzentrale 4 (Fig. 1) zugeführt. Durch die k-fache Addition entsteht ein n+k Bit breiter Datenstrom. Wird k als Vielfaches von zwei gewählt, so kann die Division im Dividierer 40 in einfacher Weise durch Schieben in einem Schieberegister als Modulo-2-Division erfolgen.

Dem in Fig. 4 dargestellten Taktgenerator 3 (Fig. 1) werden. Mittelwerte M(Zn) bei 45 zugeleitet. Diese werden in einem Digital/Analog-Wandler 46 in ein Analogsignal umgewandelt und anschließend bei 47 tiefpaßgefiltert. Das Ausgangssignal des Tiefpaßfilters 47 stellt eine Stellgröße für einen steuerbaren Oszillator 48 dar, der eine Frequenz f1 erzeugt, die vom Füllstand des FIFO-Speichers 21 (Fig. 2) abhängig ist. Das Signal mit der Frequenz f1 wird einem Frequenzteiler 49 zugeführt, der mehrere Abgriffe mit den Frequenzen fs1, fs2 bis fsm aufweist. Aus diesen Signalen wird mit Hilfe eines Datenselektors 50 der Datentakt To abgeleitet. Dieser Takt steht einerseits an einem Ausgang 51 zur Verfügung; andererseits steuert er einen Pufferspeicher 52, dem über einen Eingang 53 vom Speicher 1 (Fig. 1) die Daten Dint zugeleitet werden. Am Ausgang 54 des Pufferspeichers 52 stehen die Daten Do im Takt To zur Verfügung. Ein Steuereingang des Datenselektors 50 ist über einen Steuerbus 55 für die Taktfrequenz'verbunden, über den die Frequenz des Taktes To gewählt werden kann.

Bei dem Ausführungsbeispiel des Taktgenerators nach Fig. 4 ist ein weiterer steuerbarer Oszillator 56 vorgesehen, dessen Frequenz f2 in einem weiteren Frequenzteiler 57 geteilt wird, wobei einzelne von dem weiteren Frequenzteiler 57 erzeugte Frequenzen einem weiteren Datenselektor 58 zugeleitet werden, der über den Steuerbus 55 alternativ zum Datenselektor 50 angewählt werden kann. Durch eine geeignete Wahl der Frequenzen f1 und f2 ist es somit möglich, einen großen Bereich von Taktfrequenzen mit einem Taktgenerator zu erfassen.

Wird der Takt Tint für die Taktzentrale 4 aus der Frequenz des steuerbaren Oszillators abgeleitet, kann der Pufferspeicher 52 sehr klein ausgeführt werden, da der Datendurchsatz durch die vorher beschriebenen Schaltungen dann abhängig von der Datenmenge Di am Eingang 5 (Fig. 1) nachgeregelt wird.

## Patentansprüche

1. Verfahren zur empfangsseitigen Taktrückgewinnung für Digitalsignale mit konstanter Bitrate nach zellstrukturierter, asynchroner Übertragung mit unterschiedlich langen Pausen zwischen einzelnen Zellen unter Benutzung des Füllstandes eines FIFO-Speichers (21), in welchen die empfangenen Digitalsignale eingeschrieben werden, **dadurch gekennzeichnet, daß** zu Beginn einer Übertragung in den mehrere Zellen der empfangenen Signale fassenden FIFO-Speicher (21) zunächst die Digitalsignale mit einem empfangenen Takt eingelesen werden, bis der FIFO-Speicher (21) halb gefüllt ist, daß die in den FIFO-Speicher (21) eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers (21) in ein Analogsignal umgewandelt wird, das als Stellgröße einem spannungsgesteuerten Oszillator (48, 56) zugeführt wird, aus dessem Ausgangssignal der Auslesetakt abgeleitet wird, und daß ein aus den empfangenen Digitalsignalen gewonnener Zelltakt zur zeitlichen Festlegung von Abfragen des Füllstandes des FIFO-Speichers (21) benutzt wird.

2. Verfahren nach Anspruch 1, **dadurch gekennzeichnet, daß** die Stellgröße mehreren spannungsgesteuerten Oszillatoren (48, 56) zugeführt wird.

3. Verfahren nach einem der Ansprüche 1 oder 2, **dadurch gekennzeichnet, daß** der Füllstand des FIFO-Speichers (21) in Zeitabständen von mehreren Zelltaktperioden abgefragt wird.

4. Verfahren nach einem der Ansprüche 2 oder 3, **dadurch gekennzeichnet, daß** über mehrere Abfragen des Füllstandes des FIFO-Speichers (21) ein Mittelwert gebildet wird.

5. Anordnung zur empfangsseitigen Taktrückgewinnung für Digitalsignale mit konstanter Bitrate nach zellstrukturierter, asynchroner Übertragung mit unterschiedlich langen Pausen zwischen einzelnen Zellen unter Benutzung des Füllstandes eines FIFO-Speichers (21), in welchen die empfangenen Digitalsignale eingeschrieben werden, **dadurch gekennzeichnet, daß** die Anordnung derart ausgestaltet ist, daß zu Beginn einer Übertragung in den mehrere Zellen der empfangenen Signale fassenden FIFO-Speicher (21) zunächst die Digitalsignale mit einem empfangenen Takt eingelesen werden, bis der FIFO-Speicher (21) halb gefüllt ist, daß die in den FIFO-Speicher (21) eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers (21) in ein Analogsignal umgewandelt wird, das als Stellgröße einem spannungsgesteuerten Oszillator (48, 56) zugeführt wird, aus dessem Ausgangssignal der Auslesetakt abgeleitet wird, daß ein aus den empfangenen Digitalsignalen gewonnener Zelltakt zur zeitlichen Festlegung von Abfragen des Füllstandes des FIFO-Speichers (21) benutzt wird, und daß zur Gewinnung eines Datentaktes mit wählbarer Frequenz dem spannungsgesteuerten Oszillator ein steuerbarer Frequenzteiler (49, 50; 57, 58) nachgeschaltet ist.

6. Anordnung nach Anspruch 5, **dadurch gekennzeichnet, daß** ein aus den empfangenen Digitalsignalen gewonnener Zelltakt zur zeitlichen Festlegung von Abfragen des Füllstandes des FIFO-Speichers (21) benutzt wird, daß die Anordnung derart ausgestaltet ist, daß der Frequenzteiler in Abhängigkeit von mit den Digitalsignalen empfangenen Steuerdaten steuerbar ist.

7. Anordnung nach Anspruch 5, **dadurch gekennzeichnet, daß** die Anordnung derart ausgestaltet ist, daß ein interner Takt aus dem Signal des spannungsgesteuerten Oszillators (48, 56) abgeleitet wird.

8. Anordnung nach Anspruch 5, **dadurch gekennzeichnet, daß** die Anordnung derart ausgestaltet ist, daß der Frequenzteiler (49, 50; 57, 58) in Abhängigkeit vom Füllstand steuerbar ist.

9. Anordnung zur empfangsseitigen Taktrückgewinnung für Digitalsignale mit konstanter Bitrate nach zellstrukturierter, asynchroner Übertragung mit unterschiedlich langen Pausen zwischen einzelnen Zellen unter Benutzung des Füllstandes eines FIFO-Speichers (21), in welchen die empfangenen Digitalsignale eingeschrieben werden, **dadurch gekennzeichnet, daß** die Anordnung derart ausgestaltet ist, daß zu Beginn einer Übertragung in den mehrere Zellen der empfangenen Signale fassenden FIFO-Speicher (21) zunächst die Digitalsignale mit einem empfangenen Takt eingelesen werden, bis der FIFO-Speicher (21) halb gefüllt ist, daß die in den FIFO-Speicher (21) eingeschriebenen Digitalsignale mit einem Auslesetakt ausgelesen werden, dessen Frequenz kleiner als die Frequenz des empfangenen Taktes ist, daß während des Auslesens der jeweilige Füllstand des FIFO-Speichers (21) in ein Analogsignal zur Steuerung der Frequenz des Auslesetaktes umgewandelt wird, das als Stellgröße einem spannungsgesteuerten Oszillator (48, 56) zugeführt wird, aus dessem Ausgangssignal der Auslesetakt abgeleitet wird, daß ein aus den empfangenen Digitalsignalen gewonnener Zelltakt zur zeitlichen Festlegung von Abfragen des Füllstandes des FIFO-Speichers (21) benutzt wird, und daß der FIFO-Speicher (21) vor einem Zellauflöser angeordnet ist.

## Claims

1. Process for receiving-end clock recovery for digital signals of constant bit rate after cell-structured, asynchronous transmission with pauses of different length between individual cells using the fill level of a FIFO storage (21) to which the received digital signals are written, **characterized in that**, at the beginning of a transmission, first of all the digital signals are read with a received clock into the FIFO storage (21) - which FIFO storage (21) holds a plurality of cells of the received signals - until the FIFO storage (21) is half filled; **in that** the digital signals written to the FIFO storage (21) are read out with a readout clock, the frequency of which is smaller than the frequency of the received clock; **in that**, during reading out, the respective fill level of the FIFO storage (21) is converted into an analogue signal, said analogue signal being supplied as a manipulated variable to a voltage-controlled oscillator (48, 56) from the output signal of which is derived the readout clock; and **in that** a cell clock produced from the received digital signals is used for determining the timing of queries of the fill level of the FIFO storage (21).

2. Process according to claim 1, **characterized in that** the manipulated variable is supplied to a plurality of voltage-controlled oscillators (48, 56).

3. Process according to any one of claims 1 or 2, **characterized in that** the fill level of the FIFO storage (21) is queried at intervals of two or more cell clock periods.

4. Process according to any one of claims 2 or 3, **characterized in that** an average value is formed over two or more queries of the fill level of the FIFO storage (21).

5. Arrangement for receiving-end clock recovery for digital signals of constant bit rate after cell-structured, asynchronous transmission with pauses of different length between individual cells using the fill level of a FIFO storage (21) to which the received digital signals are written, **characterized in that** the arrangement is of such design that, at the beginning of a transmission, first of all the digital signals are read with a received clock into the FIFO storage (21) - which FIFO storage (21) holds a plurality of cells of the received signals - until the FIFO storage (21) is half filled; **in that** the digital signals written to the FIFO storage (21) are read out with a readout clock, the frequency of which is smaller than the frequency of the received clock; **in that**, during reading out, the respective fill level of the FIFO storage (21) is converted into an analogue signal, said analogue signal being supplied as a manipulated variable to a voltage-controlled oscillator (48, 56) from the output signal of which is derived the readout clock; **in that** a cell clock produced from the received digital signals is used for determining the timing of queries of the fill level of the FIFO storage (21); and **in that**, in order to produce a data clock of selectable frequency, a controllable frequency divider (49, 50; 57, 58) is connected after the voltage-controlled oscillator.

6. Arrangement according to claim 5, **characterized in that** the arrangement is of such design that the frequency divider is controllable as a function of control data received with the digital signals.

7. Arrangement according to claim 5, **characterized in that** the arrangement is of such design that an internal clock is derived from the signal of the voltage-controlled oscillator (48, 56).

8. Arrangement according to claim 5, **characterized in that** the arrangement is of such design that the frequency divider (49, 50; 57, 58) is controllable as a function of the fill level.

9. Arrangement for receiving-end clock recovery for digital signals of constant bit rate after cell-structured, asynchronous transmission with pauses of different length between individual cells using the fill level of a FIFO storage (21) to which the received digital signals are written, **characterized in that** the arrangement is of such design that, at the beginning of a transmission, first of all the digital signals are read with a received clock into the FIFO storage (21) - which FIFO storage (21) holds a plurality of cells of the received signals - until the FIFO storage (21) is half filled; **in that** the digital signals written to the FIFO storage (21) are read out with a readout clock, the frequency of which is smaller than the frequency of the received clock; **in that**, during reading out, the respective fill level of the FIFO storage (21) is converted into an analogue signal for controlling the frequency of the readout clock, said analogue signal being supplied as a manipulated variable to a voltage-controlled oscillator (48, 56) from the output signal of which is derived the readout clock; **in that** a cell clock produced from the received data signals is used for determining the timing of queries of the fill level of the FIFO storage (21); and **in that** the FIFO storage (21) is disposed before a cell resolver.

## Revendications

1. Procédé pour la récupération, côté réception, du rythme de signaux numériques d'un taux binaire constant après transmission asynchrone cellulaire comportant des pauses de différentes longueurs entre différentes cellules en utilisant le niveau d'occupation d'une mémoire FIFO (21) dans laquelle les signaux numériques reçus sont écrits, **caractérisé en ce qu'**au début d'une transmission ce sont d'abord les signaux numériques qui sont lus dans la mémoire FIFO contenant plusieurs cellules des signaux reçus (21) à un rythme reçu jusqu'à ce que la mémoire FIFO (21) soit à moitié pleine, **en ce que** les signaux numériques écrits dans la mémoire FIFO (21) sont sélectionnés à un rythme de sélection dont la fréquence est inférieure à la fréquence du rythme reçu, **en ce que**, pendant la sélection, le niveau d'occupation de la mémoire FIFO (21) est transformé en signal analogique qui est conduit en tant que grandeur réglante vers un oscillateur commandé en tension (48, 56) à partir du signal de sortie duquel le rythme de sélection est dérivé et **en ce qu'**un rythme de cellule obtenu à partir des signaux numériques reçus est utilisé pour fixer dans le temps des interrogations du niveau d'occupation de la mémoire FIFO (21).

2. Procédé selon revendication 1, **caractérisé en ce que** la grandeur réglante est conduite à plusieurs oscillateurs commandés en tension (45, 56).

3. Procédé selon l'une des revendications 1 ou 2, **caractérisé en ce que** le niveau d'occupation de la mémoire FIFO (21) est interrogé à des intervalles de plusieurs périodes de rythme de cellule.

4. Procédé selon l'une des revendications 2 ou 3, **caractérisé en ce que** l'on forme une moyenne en interrogeant plusieurs fois le niveau d'occupation de la mémoire FIFO (21).

5. Disposition pour la récupération, côté réception, du rythme de signaux numériques d'un taux binaire constant après transmission asynchrone cellulaire comportant des pauses de différentes longueurs entre les différentes cellules en utilisant le niveau d'occupation d'une mémoire FIFO (21) dans laquelle les signaux numériques reçus sont écrits, **caractérisée en ce que** la disposition est conformée de telle façon qu'au début d'une transmission ce sont d'abord les signaux numériques qui sont lus dans la mémoire FIFO (21) contenant plusieurs cellules des signaux reçus à un rythme reçu jusqu'à ce que la mémoire FIFO (21) soit à moitié pleine, **en ce que** les signaux numériques écrits dans la mémoire FIFO (21) sont sélectionnés à un rythme de sélection dont la fréquence est inférieure à la fréquence du rythme reçu, **en ce que**, pendant la sélection, le niveau d'occupation de la mémoire FIFO (21) est transformé en signal analogique qui est conduit en tant que grandeur réglante vers un oscillateur commandé en tension (48, 56) à partir du signal de sortie duquel le rythme de lecture est dérivé, **en ce qu'**on utilise un rythme de cellule obtenu à partir des signaux numériques reçus pour fixer dans le temps des interrogations du niveau d'occupation de la mémoire FIFO (21), et **en ce qu'**un diviseur de fréquence (49, 50, 57, 58) est placé en aval de l'oscillateur commandé en tension pour obtenir un rythme de donnée dont la fréquence peut être choisie.

6. Disposition selon revendication 5, **caractérisée en ce que** la disposition est conformée de telle façon que le diviseur de fréquence peut être commandé en fonction de données de commande reçues avec les signaux numériques.

7. Disposition selon revendication 5, **caractérisée en ce que** la disposition est conformée de telle façon qu'un rythme interne est dérivé du signal de l'oscillateur commandé en tension (48, 56).

8. Disposition selon revendication 5, **caractérisée en ce que** la disposition est conformée de telle façon que le diviseur de fréquence (49, 50, 57, 58) peut être commandé en fonction du niveau d'occupation.

9. Disposition pour la récupération, côté réception, du rythme de signaux numériques d'un taux binaire constant après transmission asynchrone cellulaire comportant des pauses de différentes longueurs entre différentes cellules en utilisant le niveau d'occupation d'une mémoire FIFO (21) dans laquelle les signaux numériques reçus sont écrits, **caractérisée en ce que** la disposition est conformée de telle façon qu'au début d'une transmission ce sont d'abord les signaux numériques qui sont lus dans la mémoire FIFO (21) contenant plusieurs cellules des signaux reçus à un rythme reçu jusqu'à ce que la mémoire FIFO (21) soit à moitié pleine, **en ce que** les signaux numériques écrits dans la mémoire FIFO (21) sont sélectionnés à un rythme de sélection dont la fréquence est inférieure à la fréquence du rythme reçu, **en ce que**, pendant la sélection, le niveau d'occupation de la mémoire FIFO (21) est transformé en signal analogique destiné à la commande de la fréquence du rythme de sélection qui est conduit en tant que grandeur réglante vers un oscillateur commandé en tension (48, 56) à partir du signal de sortie duquel le rythme de sélection est dérivé, **en ce qu'**on utilise un rythme de cellule obtenu à partir des signaux numériques reçus pour fixer dans le temps des interrogations du niveau d'occupation de la mémoire FIFO (21), et **en ce que** la mémoire FIFO (21) est placée avant un résolveur de cellule.
